# Europäisches Patentamt
## European Patent Office
## Office européen des brevets

(19)

(11) Veröffentlichungsnummer: **0 192 249**
**B1**

(12) **EUROPÄISCHE PATENTSCHRIFT**

(45) Veröffentlichungstag der Patentschrift: **20.06.90**

(51) Int. Cl.⁵: **B 32 B 17/06, C 09 K 21/00**

(21) Anmeldenummer: **86102130.1**

(22) Anmeldetag: **19.02.86**

(54) Glasbauelement mit Brandschutzfüllung.

(30) Priorität: **22.02.85 DE 3506134**

(43) Veröffentlichungstag der Anmeldung:
**27.08.86 Patentblatt 86/35**

(45) Bekanntmachung des Hinweises auf die
Patenterteilung:
**20.06.90 Patentblatt 90/25**

(84) Benannte Vertragsstaaten:
**AT BE CH FR GB IT LI SE**

(56) Entgegenhaltungen:
EP-A-0 006 525
FR-A-2 399 513
FR-A-2 517 667
LU-A- 60 053
US-A-2 623 828
US-A-3 498 807
US-A-4 013 749

(73) Patentinhaber: **FLACHGLAS
AKTIENGESELLSCHAFT
Otto-Seeling-Promenade 10-14
D-8510 Fürth (DE)**

(72) Erfinder: **Nolte, Hans-Henning
Beethovenstrasse 29
D-4650 Gelsenkirchen (DE)**
Erfinder: **Von Reis, Wolf
Steeler Strasse 34
D-4650 Gelsenkirchen (DE)**

(74) Vertreter: **Andrejewski, Walter et al
Patentanwälte Dipl.-Phys. Dr. Walter
Andrejewski Dipl.-Ing. Dr.-Ing. Manfred Honke
Dipl.-Phys. Dr. Karl Gerhard Masch Theaterplatz
3, Postfach 10 02 54
D-4300 Essen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung bezieht sich gattungsgemäß auf ein Glasbauelement mit zumindest einem Hohlraum sowie mit einer hauptsächlich aus Wasser bestehenden Brandschutzfüllung in dem Hohlraum, die in verfestigtes Hydrogel enthält.—Glasbauelement meint alle aus Glas bestehend und einen offenen oder geschlossenen Hohlraum aufweisenden Bauteile, die bei Bauwerken eingesetzt werden und ausschließlich oder neben anderen Zwecken eine Brandschutzfunktion erfüllen. Die Glasbauelemente können außerdem als wandbildende Bauteile. Fenster oder dergleichen eingesetzt werden. Insbesondere handelt es sich um Isolierglaseinheiten, Glasbausteine, Profilglaselemente, auch in Form von U-Profilen, Isolierglaseinheiten im Sinne einer Isolierung gegen Brandeinwirkung. Der Brandschutz erfolgt, weil bei solchen Glasbauelementen unter der Einwirkung thermischer Strahlung Wasser verdampft, wobei die Verdampfungswärme und der frei werdende Wasserdampf den Brandschutz bewirken. Bei der Einwirkung der thermischen Strahlung zerspringt zumindest eine der Glaswände, beispielsweise eine der Glasscheiben.

Bei den bekannten gattungsgemäßen Glasbauelementen (DE—PS 27 13 849) handelt es sich um eine Isolierglaseinheit aus wenigstens zwei parallelen, auf Abstand zueinander gehaltenen Glasscheiben, zwischen denen eine Wasser, ein wasserlösliches Salz, welches unter der Wirkung thermischer Strahlung einen isolierenden Schaum bildet, und ein stabilisierendes Polymer enthaltende Schicht angeordnet ist. Die Schicht besteht aus einem Hydrogel und weist 65 bis 95 Gew.-% freies Wasser sowie 1 bis 20 Gew.-% des Salzes auf, wobei das stabiliserende Polymer als Gebildener funktioniert. Als stabilisierendes Polymer werden insbesondere Acrylsäure-Derivate, z.B. Acrylsäureamid, genannt.

Bei der bekannten Ausführungsform stört, daß die Brandschutzfüllung lediglich aus einem Gel besteht. Zwar soll das Gel so fest sein, daß bei Zerstörung einer Glasscheibe die Schicht nicht ausläuft, solche Gele sind jedoch schon unter dem Einfluß nichtbrandbedingter thermischer Strahlung nicht hinreichend alterungsbeständig. Durch Alterung tritt eine störende Beeinträchtigung der Lichtdurchlässigkeit ein. Die bekannten Glasbauelemente sind insoweit nicht hinreichend thermische stabil. Andererseits verlangt die Praxis einwandfreie Lichtdurchlässigkeit bis zum Wirksamwerden der Brandschutzfunktion.

Der Erfindung liegt die Aufgabe zugrunde, ein gattungsgemäßes Glasbauelement so weiterzuentwickeln, daß die thermische Stabilität wesentlich verbessert und eine einwandfreie Lichtdurchlässigkeit langfristig gewährleistet ist.

Zur Lösung dieser Aufgabe lehrt die Erfindung, daß das Hydroge aus bis zu 20 Gew.-% $SiO_2$, bis 10 Gew.-% $Na_2O$, bis 25 Gew.-% einer organischen und/oder anorganischen Säure, die mit Natriumwasserglas gelbildend reagiert. Rest: Wasser, besteht, welchem Wasser vor der Hydrogelbildung ein Konservierungsmittel beigegeben worden ist. Dabei bilden 2 bis 4 Mol $SiO_2$ mit 1 Mol Natriumoxid das Natriumwasserglas. Das entstehende Hydrogel weist bereits eine hohe Festigkeit auf und ist in erstaunlichem Maße alterungsbeständig.

In Kombination zu den beschreibenen Maßnahmen kann das Hydrogel durch zumindest eine organisches Bindemittel zu einer lichtdurchlässigen Festkörperbrandschutzfüllung weiterverfestigt sein. Grundsätzlich ist es bekannt, Wasserglas mit einem organischen Bindemittel, z.B. Cellulose-Derivaten, zu versetzen und dadurch zu verfestigen (EP—A 00 84 266). Die aus dem Wasserglas und dem Bindemittel aufgebrauchte Mischung dient hier lediglich als Binder für die Herstellung eines besonderen Betons, wobei als Zuschlagstoff körnige Substanzen eingesetzt werden, die Wasser durch Absorption festhalten (z.B. geblähtes Vermiculit) oder Wasser als Kristallwasser enthalten. Die Zuschlagstoffe sind dabei so ausgewählt, daß sie bei Einwirkung thermischer Strahlung und Temperaturen von über 100°C das durch Absorption gebundene Wasser bzw. das Kristallwasser leicht abgeben. Eine lichtdurchlässig Brandschutzfüllung ist auf diese Weise nicht herstellbar. Die Masse aus Wasserglas und dem organischen Bindemittel allein ist darüber hinaus ohne weiteres nicht hinreichend thermostabil. Die Erfindung nutzt demgegenüber die Tatsache, daß das angegebene Hydrogel, mit oder ohne Beigabe eines organischen Bindemittels, nach Verfestigung bis zu einer Festkörperbrandschutzfüllung eine überraschende hohe thermische Stabilität aufweist, so daß eine Beeinträchtigung der Lichtdurchlässigkeit aus langzeitig nicht mehr eintritt. Dazu trägt auch das Konservierungsmittel bei. Von Vorteil ist fernehin, daß die Festkörperbrandschutzfüllung zur Gestaltfestigkeit des Glasbauelementes insgesamt mechanische beiträgt, so daß dieser erhebliche mechanische Beanspruchungen aufzunehmen, in der Lage ist, nichtsdestoweniger aber aus verhältnismäßig dünnwandigem Gas aufgebaut werden kann, welches bricht, wenn die Funktion als Brandschutzelement wahrgenommen werden muß und Wasserdampf frei wird.

Im einzelnen bestehen im Rahmen der Erfindung mehrere Möglichkeiten der weiteren Ausbildung und Gestaltung. So ist eine bevorzugte Ausführungsform der Erfindung dadurch gekennzeichnet, daß eine organische Säure aus der Gruppe Ameisensäure, Essigsäure, Oxalsäure, Weinsäure, Zitronensäure beigegeben worden ist. Es kann aber auch eine anorganische Säure aus der Gruppe Borsäure, Salpetersäure, Phosphorsäure, Schwefelsäure beigegeben worden sein. Das Konservierungsmittel gehört zweckmäßigerweise der Gruppe Kupfersulfat, Kupferacetat, Benzoesäure an oder ist eine Mischung aus diesen Stoffen. Die erforderliche Menge an Konservierungsmittel kann durch Versuche ermittelt werden. Sie liegt im allgemeinen im Bereich von 0,02 bis 0,1 Gew.-%, bezogen auf die Mischung insgesamt. Das Hydrogel kann durch die verschiedensten organischen Bindemittel, wie angegeben, weiterverfestigt werden. Bewährt hat sich eine Ausführungsform, die dadurch gekennzeichnet, ist, daß das Hydrogel durch ein organisches Bindemittel der Gruppe Gummiarabicum, Gummiarabicum-Derivate, Cellulose-Derivate, Polyvinylalkohol, Guar-Derivate, oder Mischungen davon, zu der Festkörperbrandschutzfüllung verfestigt wird. Arbeitet man mit den vorstehend angegebenen Substanzen, so reichen im allgemeinen Menge im Bereich zwischen 0,5 und 5 Gew.-% bezogen auf die Mischung insgesamt, aus.

Eine optimierte Ausführungsform erfindungsgemäßer Glasbauelemente ist dadurch gekennzeichnet, daß das Hydrogel aus

6,5 Gew.-% SiO$_2$,

2 Gew.-% Na$_2$O,

7 Gew.-% einer organischen und/oder anorganischen Säure,

Rest: Wasser

besteht, wobei dem Wasser vor der Hydrogelbildung als Konservierungsmittel Kupfersulfat in einer Menge von 0,07 Gew.-%, bezogen auf das Wasser, beigegeben worden ist.

Im Rahmen der Erfindung liegt es, dem Wasser vor der Hydrogelbildung zusätzlich ein Gelatinierungsmittel beizugeben. Auch liegt es im Rahmen der Erfindung, das Wasser vor der Hydrogelbildung mit einem Mittel zur Erhöhung der Hygroskopizität zu versetzen.

## Patentansprüche

1. Glasbauelement mit zumindest einem Hohlraum sowie mit einer hauptsächlich aus Wasser bestehenden Brandschutzfüllung, die ein verfestigtes Hydrogel enthält, dadurch gekennzeichnet, daß das Hydrogel aus

bis 20 Gew.-% SiO$_2$,

bis 10 Gew.-% Na$_2$O,

bis 25 Gew.-% einer organischen und/oder anorganischen Säure, die mit Natriumwasserglas bildend reagiert,

Rest: Wasser

besteht, welchem Wasser vor der Hydrogelbildung ein Konservierungsmittel beigegeben worden ist.

2. Glasbauelement nach Anspruch 1, dadurch gekennzeichnet, daß das Hydrogel durch zumindest ein organisches Bindemittel zu einer lichtdurchlässigen Festkörperbrandschutzfüllung weiterverfestigt ist.

3. Glasbauelement nach einem der Ansprüche 1 oder 2, dadurch gekennzeichnet, daß eine organische Säure aus der Gruppe Ameisensäure, Essigsäure, Oxalsäure, Weinsäure, Zitronensäure eingesetzt worden ist.

4. Glasbauelement nach einem der Ansprüche 1 oder 2, dadurch gekennzeichnet, daß eine anorganische Säure aus der Gruppe Borsäure, Salpetersäure, Phosphorsäure, Schwefelsäure eingesetzt worden ist.

5. Glasbauelement nach einem der Ansprüche 1 bis 4, dadurch gekennzeichnet, daß ein Konservierungsmittel aus der Gruppe Kupfersulfat, Kupferacetat, Benzoesäure, oder Mischungen davon, beigegeben worden ist.

6. Glasbauelement nach einem der Ansprüche 2 bis 5, dadurch gekennzeichnet, daß das Hydrogel durch ein organisches Bindemittel der Gruppe

Gummiarabicum,

Gummiarabicum-Derivate,

Cellulose-Derivate,

Polyvinylalkohol,

Guar-Derivate, oder Mischungen davon weiter verfestigt ist.

7. Glasbauelement nach einem der Ansprüche 1 bis 6, dadurch gekennzeichnet, daß weitere Metallsalze, wie Calciumchlorid, Aluminiumchlorid, als Verfestigungsmittel beigegeben sind.

8. Glasbauelement nach einem der Ansprüche 1 bis 7, dadurch gekennzeichnet, daß das Hydrogel aus

6,5 Gew.-% SiO$_2$,

2 Gew.-% Na$_2$O,

7 Gew.-% einer organischen und/oder anorganischen Säure,

Rest: Wasser

besteht, wobei dem Wasser vor der Hydrogelbildung als Konservierungsmittel Kupfersulfat in einer Menge von 0,07 Gew.-%, bezogen auf das Wasser, beigegeben worden ist.

9. Glasbauelement nach einem der Ansprüche 1 bis 8, dadurch gekennzeichnet, daß dem Wasser vor der Hydrogelbildung zusätzlich ein Gelatinierungsmittel beigegeben worden ist.

10. Glasbauelement nach einem der Ansprüche 1 bis 9, dadurch gekennzeichnet, daß dem Wasser zusätzlich ein Mittel zur Erhöhung der Hygroskopizität beigegeben worden ist.

## Revendications

1. Elément de construction en verre comportant au moins une cavité ainsi qu'une charge de remplissage de protection contre l'incendie, constituée principalement par de l'eau, qui contient un hydrogel consolidé, caractérisé en ce que l'hydrogel est constitué par

jusqu'à 20% en poids de SiO$_2$,

jusqu'à 10% en poids de Na$_2$O,

jusqu'à 25% en poids d'un acide organique et/ou minéral qui réagit avec du verre soluble pour former un gel,

le reste étant formé par de l'eau,

un agent de conservation ayant été ajouté à l'eau avant la formation de l'hydrogel.

2. Elément de construction en verre selon la revendication 1, caractérisé en ce que l'hydrogel est consolidé de façon supplémentaire par au moins un liant organique de manière à former une charge de remplissage solide et transparente, en réalisant une protection contre l'incendie.

3. Elément de construction selon l'une des revendications 1 ou 2, caractérisé en ce qu'on a ajouté un acide organique du groupe incluant l'acide formique, l'acide acétique, l'acide oxalique, l'acide tartrique et l'acide citrique.

4. Elément de construction selon l'une des revendications 1 ou 2, caractérisé en ce qu'on a utilisé un acide minéral du groupe incluant l'acide borique, l'acide nitrique, l'acide phosphorique, l'acide sulfurique.

5. Elément de construction en verre selon l'une quelconque des revendications 1 à 4, caractérisé en ce qu'on ajoute un agent de conservation tiré du groupe incluant le sulfate de cuivre, l'acétate de cuivre, l'acide benzoïque ou des mélanges de ces substances.

6. Elément de construction en verre selon l'une quelconque des revendications 2 à 5, caractérisé en ce que l'hydrogel a été consolidé de façon supplémentaire par un liant organique du groupe
gomme arabique,
dérivés de la gomme arabique,
dérivés de la cellulose,
alcool polyvinylique,
dérivés de guar,
ou des mélanges de ces substances.

7. Elément de construction en verre selon l'une quelconque des revendications 1 à 6, caractérisé en ce qu'on ajoute comme agents de consolidation, d'autres sels métalliques comme du chlorure de calcium ou du chlorure d'aluminium.

8. Elément de construction en verre selon l'une quelconque des revendications 1 à 7, caractérisé par le fait que l'hydrogel est constitué par
6,5% en poids de $SiO_2$,
2% en poids de $NaO_2$,
7% en poids d'un acide organique et/ou minéral,
le reste étant formé d'eau du sulfate de cuivre ayant été ajouté à l'eau, avant la formation de l'hydrogène, en tant qu'agent de conservation, en une quantité égale à 0,07% en poids rapportée à l'eau.

9. Elément de construction en verre selon l'une quelconque des revendications 1 à 8, caractérisé en ce qu'un agent de gélatinisation a été ajouté en supplément à l'eau avant la formation de l'hydrogel.

10. Elément de construction en verre selon l'une quelconque des revendications 1 à 9, caractérisé en ce qu'un agent augmentant le caractère hygroscopique a en outre été ajouté à l'eau.

## Claims

1. A glass constructional unit with at least one hollow space with a fire protection filling consisting mainly of water that contains a solidifed water gel, characterized in that the water gel consists of:
up to 20% by weight of $SiO_2$,
up to 10% by weight of $Na_2O$,
up to 25% by weight of an organic and/or inorganic acid that reacts with sodium waterglass to form a compound,
Remainder: Water
to which water a preservative has been added before the formation of the water gel.

2. A glass constructional unit according to Claim 1, characterized in that the water gel is further hardened by at least one organic binding medium to form a solid fire protection filling that is transparent to light.

3. A glass constructional unit according to one of Claims 1 or 2, characterized in that an organic acid of the formic acid, acetic acid, oxalic acid, tartaric acid, citric acid group has been used.

4. A glass constructional unit according to one of Claims 1 or 2, characterized in that an inorganic acid of the boric acid, nitric acid, phosphoric acid, sulphuric acid group has been used.

5. A glass constructional unit according to one of Claims 1 to 4, characterized in that a preservation agent of the copper sulphate, copper acetate, benzoic acid group, or mixtures thereof, has been added.

6. A glass constructional unit according to one of Claims 2 to 5, characterized in that the water gel has been further solidified by an organic binding medium of the
gum arabic,
gum arabic derivatives
cellulose derivatives
polyvinyl alcohol
guar derivatives
group, or mixtures thereof.

7. A glass constructional unit according to one of Claims 1 to 6, characterized in that further metal salts such as calcium chloride or aluminium chloride are added as solidification agents.

8. A glass constructional unit according to one of Claims 1 to 7, characterized in that the water gel consists of
6.5% by weight of $SiO_2$,
2% by weight of $Na_2O$,
7% by weight of an organic and/or inorganic acid,
Remainder: Water
in which before the formation of the water gel a quantity of 0.07% by weight of copper sulphate relatively to the weight of the water has been added to the water as a preservative.

9. A glass constructional unit according to one of Claims 1 to 8, characterized in that before the formation of the water gel a gelatinizing agent has additionally been added to the water.

10. A glass constructional unit according to one of Claims 1 to 9, characterized in that an additional medium to increase the hygroscopicity has been added to the water.